# EUROPÄISCHE PATENTSCHRIFT

(11) **EP 2 845 770 B1**
(45) Veröffentlichungstag und Bekanntmachung des Hinweises auf die Patenterteilung: **25.10.2017**
(21) Anmeldenummer: 14002992.7
(22) Anmeldetag: 29.08.2014
(51) Int. Cl.: B60R 9/06, B60R 9/10

(54) **LASTENTRÄGER FÜR EIN KRAFTFAHRZEUG MIT KLEMMKONTUREN**
LOAD CARRIER FOR A MOTOR VEHICLE WITH CLAMP CONTOURS
SUPPORT DE CHARGE POUR UN VÉHICULE AUTOMOBILE DOTÉ DE CONTOURS DE SERRAGE

(30) Priorität: 10.09.2013 DE 102013014965
(43) Veröffentlichungstag der Anmeldung: 11.03.2015
(73) Patentinhaber: WESTFALIA - Automotive GmbH, 33378 Rheda-Wiedenbrück (DE)
(72) Erfinder: Recker, Andreas, 33617 Bielefeld (DE)
(74) Vertreter: Patentanwälte Bregenzer und Reule Partnerschaftsgesellschaft mbB

(56) Entgegenhaltungen:
- EP-A1- 1 876 061
- EP-A1- 2 256 003
- EP-A1- 2 363 323
- EP-A1- 2 457 777

## Beschreibung

Die Erfindung betrifft einen Lastenträger für ein Kraftfahrzeug, insbesondere einen Personenkraftwagen, mit einer Schlitten-Führungsbasis, insbesondere zur Montage an einer Lastenträgeraufnahme des Kraftfahrzeugs, und mit einem an der Schlitten-Führungsbasis geführten, zwischen einer Ruhestellung und einer Gebrauchsstellung entlang einer Längsachse verstellbaren Schlitten, gemäß dem Oberbegriff des Anspruchs 1. Ein solcher Lastenträger ist beispielsweise in EP 2 363 323 A1 beschrieben.
Ein weiterer Lastenträger ist beispielsweise in DE 10 2009 060 387 A1 beschrieben. In den jeweiligen Positionen jedenfalls liegen die Läuferschienen an den Führungsschienen an. In der Gebrauchsstellung sind die Läuferschienen an den Führungsschienen verklemmt, während in der Ruhestellung eine Riegelanordnung den Schlitten in seiner Längsposition hält. In der Praxis haben sich Probleme ergeben, weil der in Ruhestellung befindliche Schlitten beim Fahrbetrieb zu Schwingungen neigt, mit anderen Worten also Klappergeräusche entstehen.
Es ist daher die Aufgabe der vorliegenden Erfindung, einen verbesserten Lastenträger bereitzustellen.
Zur Lösung der Aufgabe ist ein Lastenträger gemäß der technischen Lehre des Anspruchs 1 vorgesehen.

Es ist ein Grundgedanke der vorliegenden Erfindung, dass der Schlitten in der Ruhestellung, der Gebrauchsstellung oder beiden, bezüglich der Schlitten-Führungsbasis in einen Klemmsitz gelangt, so dass es zu den unerwünschten Klappergeräuschen erst gar nicht kommt. Es ist auch möglich, dass der Schlitten in Zwischenstellungen zwischen der Ruhestellung und der Gebrauchsstellung diesen Klemmsitz erreicht, d.h. dass die entsprechenden Klemmkonturen und Gegenklemmkonturen in Eingriff miteinander gelangen. Es ist beispielsweise möglich, dass der Schlitten sozusagen mehrere Gebrauchsstellungen hat, beispielsweise bezüglich der Schlitten-Führungsbasis mindestens eine teilweise aus der Ruhestellung verstellte erste Längsposition und eine maximal aus der Ruhestellung verstellte Längsposition. Wenn nur kleinere Lasten zu transportieren sind, kann eine derartige Zwischen-Gebrauchsstellung oder Längsposition vorteilhaft sein.

Die Klemmkontur oder die Gegenklemmkontur oder beide können relativ ortsfest sein, d.h. insgesamt nicht nachgiebig. Es ist auch denkbar, dass relativ nachgiebiges Kunststoffmaterial bei dem Klemmkörper oder Gegenklemmkörper oder beiden verwendet wird, das zumindest im Bereich der Klemmkontur oder Gegenklemmkontur eine gewisse Nachgiebigkeit oder Elastizität aufweist.

Eine vorteilhafte Variante der Erfindung sieht vor, dass die mindestens eine Klemmkontur oder die mindestens eine Gegenklemmkontur oder beide jeweils an einem in Richtung einer Klemmstellung federbelasteten oder federnden Klemmabschnitt des Klemmkörpers oder des Gegenklemmkörpers angeordnet sind. Der Klemmabschnitt ist beispielsweise an einer federnden Zunge oder einem federnden Vorsprung vorgesehen.

Die mindestens eine Klemmkontur oder die mindestens eine Gegenklemmkontur umfassen zweckmäßigerweise eine Schrägfläche oder Keilfläche. Es ist auch möglich, dass die jeweilige Klemmkontur oder Gegenklemmkontur durch eine Schrägfläche gebildet ist. Es ist dabei möglich, dass beide Konturen als Schrägflächen ausgestaltet sind. Es ist aber auch möglich, dass beispielsweise die Klemmkontur eine Schrägfläche aufweist, während die Gegenklemmkontur dies gerade nicht hat. Mithin reicht also für eine Schrägflächenanordnung, die bei der Klemmkontur und der Gegenklemmkontur vorgesehen sind, eine Schrägfläche oder Keilfläche aus.

Der mindestens einen Klemmkontur und/oder der mindestens einen Gegenklemmkontur ist eine Auflaufschräge oder Einführschräge vorgelagert, an der die Klemmkontur oder die Gegenklemmkontur beim Auflaufen auf den Klemmkörper oder den Gegenklemmkörper aufläuft und in Richtung der in Bewegungsrichtung sozusagen nachgelagerten Klemmkontur oder der Gegenklemmkontur geführt wird. Somit gelangt also beispielsweise die Klemmkontur zunächst auf eine Auflaufschräge und wird dann in Richtung der Gegenklemmkontur geführt.

Die Auslauf schräge weist zweckmäßigerweise eine steilere Neigung als eine Schrägfläche oder Keilfläche der mindestens einen Klemmkontur oder Gegenklemmkontur auf. Diese Maßnahme erleichtert das Aufgleiten. Es ist möglich, dass zwischen der Auflaufschräge und der Schrägfläche von Klemmkontur oder Gegenklemmkontur ein Winkel vorhanden ist oder dass die jeweiligen Schrägen kontinuierlich ineinander übergehen.

Der Klemmkörper oder der Gegenklemmkörper oder beide können von den Schienen separate Körper sein. Der Klemmkörper oder der Gegenklemmkörper können beispielsweise fest an der Führungsschiene oder der Läuferschiene angeordnet sein. Der Klemmkörper oder der Gegenklemmkörper oder beide können z.B. an die jeweilige Schiene oder eine sonstige sie haltende Komponente angeschraubt und/oder angeklebt und/oder angeschweißt und/oder angeklemmt und/oder angesteckt sein.

Es ist auch möglich, dass die Führungsschiene oder die Läuferschiene eine Klemmkontur oder eine Gegenklemmkontur integral bereitstellen. Mit anderen Worten ist es auch möglich, dass die Führungsschiene beispielsweise integral den Klemmkörper und die Läuferschiene integral den Gegenklemmkörper bildet.

Es ist möglich, dass die Führungsschienen und/oder die Läuferschienen direkt an dem Klemmkonzept beteiligt sind, d.h. dass die entsprechenden Klemmkonturen und Gegenklemmkonturen an der Führungsschiene und der Läuferschiene angeordnet sind.

Es ist aber auch möglich, dass der Schlitten abseits der Schienenanordnung anhand der Klemmkonturen und Gegenklemmkonturen in den Klemmsitz gelangen kann. Auch sozusagen Mischformen sind möglich, dass nämlich beispielsweise eine Klemmkontur abseits der Führungsschienen vorgesehen ist, mit der eine Gegenklemmkontur an einer oder beiden der Läuferschienen in der Klemmsitz-Längsposition in Eingriff gelangt.

An dieser Stelle sei auch bemerkt, dass selbstverständlich mehrere Klemmkonturen, Klemmkörper oder Gegenklemmkonturen und Gegenklemmkörper vorhanden sein können. Es ist zum Beispiel möglich, dass ein Klemmkörper mehrere Klemmkonturen und ein Gegenklemmkörper mehrere Gegenklemmkonturen aufweist.

Zweckmäßigerweise ist eine symmetrische Anordnung vorgesehen derart, dass beispielsweise zwei Führungsschienen parallel zur Längsachse verlaufen und an diesen Führungsschienen zwei Läuferschienen des Schlittens geführt sind. Bevorzugt sind an beiden Paarungen von Führungsschiene und Läuferschiene jeweils mindestens eine Klemmkontur und mindestens eine Gegenklemmkontur vorhanden. Eine solche Konfiguration eignet sich beispielsweise dazu, dass der Schlitten nicht verkantet, wenn er in den Klemmsitz gelangt.

Eine vorteilhafte Ausführungsform der Erfindung sieht vor, dass der Klemmkörper oder der Gegenklemmkörper oder beide eine Steckkontur zur Herstellung einer Steckverbindung mit einer Komponente des Schlittens oder der Schlitten-Führungsbasis aufweist. Die Steckkontur kann beispielsweise einen oder mehrere Steckvorsprünge und/oder mindestens eine Steckaufnahme umfassen.

In der Steck-Stellung, bei der der Klemmkörper oder Gegenklemmkörper an die Komponente des Schlittens oder der Schlitten-Führungsbasis angesteckt ist, ist vorteilhaft zudem noch einen Klemmsitz vorgesehen, d.h. dass der Klemmkörper oder Gegenklemmkörper sozusagen mit der Komponente, die ihn hält, verklemmt ist. Bei dieser Komponente handelt es sich zweckmäßigerweise um die Führungsschiene, die Läuferschiene oder auch eine Befestigungskomponente der jeweiligen Schiene, zum Beispiel eine Schraube, einen Schraubenkopf, eine Mutter oder dergleichen. Der Klemmsitz kann beispielsweise dadurch erreicht werden, dass der jeweilige Klemmkörper oder Gegenklemmkörper ein gewisses Übermaß aufweist.

Zweckmäßigerweise sind der Klemmkörper oder der Gegenklemmkörper oder beide jeweils an einem die Führungsschienen oder die Läuferschienen quer zur Bewegungsrichtung des Schlittens verbindenden Querträgerelement abgestützt. Dadurch kann der Gegenklemmkörper oder Klemmkörper besonders große Kräfte aufnehmen und Abstützen. An dieser Stelle sei bemerkt, dass selbstverständlich auch das Querträgerelement integral eine Klemmkontur oder Gegenklemmkontur aufweisen kann. Es liegt also auch im Rahmen der Erfindung, dass der Gegenklemmkörper oder Klemmkörper einen integralen Bestandteil des Querträgerelements bilden kann oder dadurch gebildet ist.

Es ist vorteilhaft, wenn der Klemmkörper und/oder der Gegenklemmkörper mindestens eine Führungsfläche zur Führung an der jeweils gegenüberliegenden Läuferschiene oder Führungsschiene aufweist. Die Führungsfläche führt also beispielsweise parallel zur Längsachse oder Bewegungsrichtung des Schlittens bezüglich der Schlitten-Führungsbasis. Insbesondere wenn der Klemmkörper oder Gegenklemmkörper aus einem Kunststoff-Material besteht, kann er zusätzlich noch eine Gleitfunktion oder Distanzfunktion entfalten, das heißt dass er die Reibungseigenschaften der Läuferschiene bei der Bewegung entlang der Führungsschiene verbessert.

Die mindestens eine Klemmkontur und die mindestens eine Gegenklemmkontur wirken zweckmäßigerweise im Sinne einer Verlagerung des Schlittens quer zur Bewegungsrichtung des Schlittens zwischen dem Schlitten und der Schlitten-Führungsbasis beim Verstellen in die Gebrauchsstellung oder die Ruhestellung oder eine sonstige Klemmsitz-Längsposition. Beispielsweise wird der Schlitten quer zur Längsachse durch die zusammenwirkenden Konturen (Klemmkontur und Gegenklemmkontur) etwas angehoben. Dadurch ist es möglich, dass ein anderer Abschnitt des Schlittens in eine Schrägstellung oder Keilstellung bezüglich der Führungsbasis gelangt und somit der Klemmsitz erzielt ist.

Insbesondere ist es vorteilhaft, wenn die Klemmkontur und die Gegenklemmkontur (es können selbstverständlich mehrere davon vorhanden sein) im Sinne eines Verkeilens wirken.

Der Klemmkörper oder der Gegenklemmkörper, die wie gesagt, separate Körper sein können oder Bestandteile von Führungsschiene und Läuferschiene, weisen zweckmäßigerweise voneinander separate Klemmkonturen oder Gegenklemmkonturen auf, die zur Zusammenwirkung mit voneinander separaten Gegenklemmkonturen oder Klemmkonturen am jeweils anderen Körper von Klemmkörper oder Gegenklemmkörper vorgesehen sind. So kann also beispielsweise der Klemmkörper zwei separate Klemmkonturen, der Gegenklemmkörper, der mit diesem zusammen wirkt, mehrere Gegenklemmkonturen aufweisen. Die verschiedenen Klemmkonturen und Gegenklemmkonturen können unterschiedliche Funktionen aufweisen, das heißt dass zum Beispiel eine Paarung von Klemmkontur und Gegenklemmkontur in eine erste Klemmrichtung wirkt, während eine andere Paarungen von Klemmkontur und Gegenklemmkontur in eine andere Richtung wirkt. So ist es beispielsweise möglich, dass der Schlitten bezüglich der Führungsbasis von der einen Paarung von Klemmkontur und Gegenklemmkontur in einer ersten Achse und von einer anderen Paarung in einer dazu winkeligen zweiten Achse in eine Schrägstellung oder Winkelstellung gebracht wird, was den Klemmsitz verbessert.

Bei der Verstellung des Schlittens in Richtung Klemmsitz-Längsposition, also beispielsweise der Ruhestellung oder der Gebrauchsstellung oder beiden, gelangen Paarungen von Klemmkontur und Gegenklemmkontur vorzugsweise sequenziell in Eingriff miteinander. Somit kann zum Beispiel zunächst die erste Paarung in eine erste Klemmrichtung wirken, während die zweite Paarung in eine zweite Klemmrichtung wirkt. Es ist auch denkbar, dass die zweite Paarung sozusagen eine zusätzliche Sicherheit gegenüber der ersten Paarung von Klemmkontur und Gegenklemmkontur darstellt.

Eine Variante der Erfindung sieht beispielsweise vor, dass die Klemmkonturen und/oder die Gegenklemmkonturen bezüglich der Längsachse, also der Verstellungsrichtung des Schlittens bezüglich der Schlitten-Führungsbasis, einen Längsabstand zueinander haben. Durch diese Maßnahme ist der vorgenannte sequenzielle Eingriff der jeweiligen Paarungen aus Klemmkontur und Gegenklemmkontur leicht realisierbar.

Eine zweckmäßige Variante der Erfindung sieht vor, dass der Klemmkörper an der einen Schiene von Läuferschiene und Führungsschiene angeordnet ist und der Gegenklemmkörper an der anderen Schiene von Läuferschiene und Führungsschiene. Die den Gegenklemmkörper haltende Schiene und der Gegenklemmkörper weisen jeweils mindestens eine mit dem Klemmkörper zusammenwirkende Gegenklemmkontur auf. Mit anderen Worten ist also beispielsweise eine Gegenklemmkontur an der Schiene, die andere Gegenklemmkontur an dem Klemmkörper oder dem Gegenklemmkörper angeordnet, der an dieser Schiene angeordnet ist. Die Schiene selbst kann also bei dieser Variante der Erfindung eine Gegenklemmkontur aufweisen.

Bevorzugt besteht in Klemmkörper und Gegenklemmkörper aus Kunststoff, beispielsweise mit einer Härte von etwa 80-120 Shore D, besonders bevorzugt etwa 100 Shore D. Praxisgerecht sind ca. 95 Shore D. Ein bevorzugtes Material sind beispielsweise thermoplastische Elastomere (TPE), insbesondere thermoplastische Elastomere auf Urethanbasis (TPU).

Eine besonders bevorzugte und in der Zeichnung näher erläuterte Variante der Erfindung sieht vor, dass die Schlitten-Führungsbasis in einer Lastenträgeraufnahme einer Karosserie des Kraftfahrzeugs aufgenommen ist. Besonders bevorzugt ist der Schlitten in der Art einer Schublade aus einem Heck eines Kraftfahrzeugs ausfahrbar.

Der erfindungsgemäße Lastenträger kann aber auch lösbar am Kraftfahrzeug befestigbar sein. Beispielsweise ist es möglich, dass die Schlitten-Führungsbasis mithilfe einer Kupplungsvorrichtung an einer Anhängekupplung des Kraftfahrzeugs befestigbar ist. Aber auch spezielle, für Lastenträger geeignete Halterungen, zum Beispiel Steckaufnahmen oder Steckvorsprünge, können zum Halten der Schlitten-Führungsbasis am Kraftfahrzeug, insbesondere dessen Karosserie, dienen. Beispielsweise umfasst die Kupplungsvorrichtung eine Klemmvorrichtung zum Anklemmen an eine Kupplungskugel eines Kugelhalses, eine Steckvorrichtung oder dergleichen.

Es ist beispielsweise möglich, dass der Schlitten zwischen der Gebrauchsstellung und der Ruhestellung verstellt wird, um sozusagen in einer Ladestellung einen größeren Längsabstand zum Heck des Kraftfahrzeugs, beispielsweise zum Öffnen einer Heckklappe des Kraftfahrzeugs, aufzuweisen. Die Ruhestellung kann also dann sozusagen die Normalposition zum Tragen der Last beim Fahrbetrieb des Kraftfahrzeugs darstellen, die von der Führungsbasis entferntere Stellung des Schlittens die Gebrauchsstellung in den Formulierungen des Anspruchs 1, also sozusagen eine Ladestellung des Schlittens.

Bei dem Kraftfahrzeug handelt es sich beispielsweise um einen Personenkraftwagen, insbesondere um ein Kraftfahrzeug mit einem Verbrennungsmotor oder einem Elektromotor oder beiden.

Eine vorteilhafte Variante der Erfindung sieht vor, dass der Schlitten in der Klemmsitz-Längsposition bezüglich der Schlitten-Führungsbasis durch eine Verriegelungseinrichtung verriegelt ist. Die mindestens eine Klemmkontur und die mindestens eine Gegenklemmkontur wirken im Sinne eines Verklemmen des Schlittens mit einer Kraftrichtung zu der Verriegelungseinrichtung hin.

Vorteilhaft ist die erfindungsgemäße Klemmeinrichtung abseits und/oder entfernt von der oder einer verriegelungseinrichtung.

Es ist beispielsweise möglich, dass die Verriegelungseinrichtung den Schlitten bezüglich der Schlitten-Führungsbasis sozusagen nur lose verriegelt und die Klemmanordnung gemäß der Erfindung dafür sorgt, dass der Schlitten gegen die Verriegelungseinrichtung gespannt oder geklemmt wird. Selbstverständlich ist es möglich, dass die Verriegelungseinrichtung selbst auch Spannschrägen, Keilschrägen oder dergleichen Spannmittel aufweist, um abseits der erfindungsgemäßen Klemmkonturen und Gegenklemmkonturen eine zusätzliche Verspannung des Schlittens bezüglich der Schlitten-Führungsbasis zu bewirken.

Nachfolgend wird ein Ausführungsbeispiel der Erfindung anhand der Zeichnung erläutert.
- Figur 1: eine perspektivische Schrägansicht eines erfindungsgemäßen Lastenträgers,
- Figur 2: ein Detail des Lastenträgers gemäß Figur 1, etwa entsprechend einem Ausschnitt D in Figur 1,
- Figur 3: das Detail gemäß Figur 2, jedoch zusätzlich mit einer Läuferschiene,
- Figur 4: eine Seitenansicht aus einer Blickrichtung B des Details gemäß Figur 4,
- Figur 5: die Seitenansicht gemäß Figur 4, jedoch entsprechend Figur 3 mit zusätzlich der Läuferschiene,
- Figur 6: einen Klemmkörper einer Klemmanordnung des Lastenträgers in perspektivischer Schrägansicht, und
- Figur 7: eine perspektivische Schrägansicht einer Variante des Klemmkörpers gemäß Figur 6.

Ein Lastenträger 10 weist einen an einer Schlitten-Führungsbasis 11 geführten Schlitten 12 auf. Der Lastenträger 10 ist an einem Kraftfahrzeug 13 befestigt. Vorliegend ist die Befestigung der Schlitten-Führungsbasis 11 so getroffen, dass der Lastenträger 10 quasi einen integralen Bestandteil des Kraftfahrzeugs 13 bildet. Gleichwohl kann der Lastenträger auch vom Kraftfahrzeug entfernt werden.

Die Integration des Lastenträgers 10 in der das Kraftfahrzeug 13 geht soweit, dass ein Stoßfängerteil 14 am Schlitten 12 in einer Ruhestellung R des Schlittens 12 mit einem in der Zeichnung nicht dargestellten Stoßfänger des Kraftfahrzeugs 13 fluchtet, quasi einen integralen Bestandteil des Stoßfängers zumindest in optischer Hinsicht bildet.

Am Stoßfängerteil 14 ist zudem ein Kennzeichenträger 15 vorgesehen, an dem ein Kennzeichen des Kraftfahrzeugs 13 anordenbar ist. Das Kraftfahrzeug 13 ist beispielsweise ein Personenkraftwagen mit Verbrennungsmotor, Elektromotor oder auch ein Hybrid-Fahrzeug. Darauf kommt es im Detail nicht an.

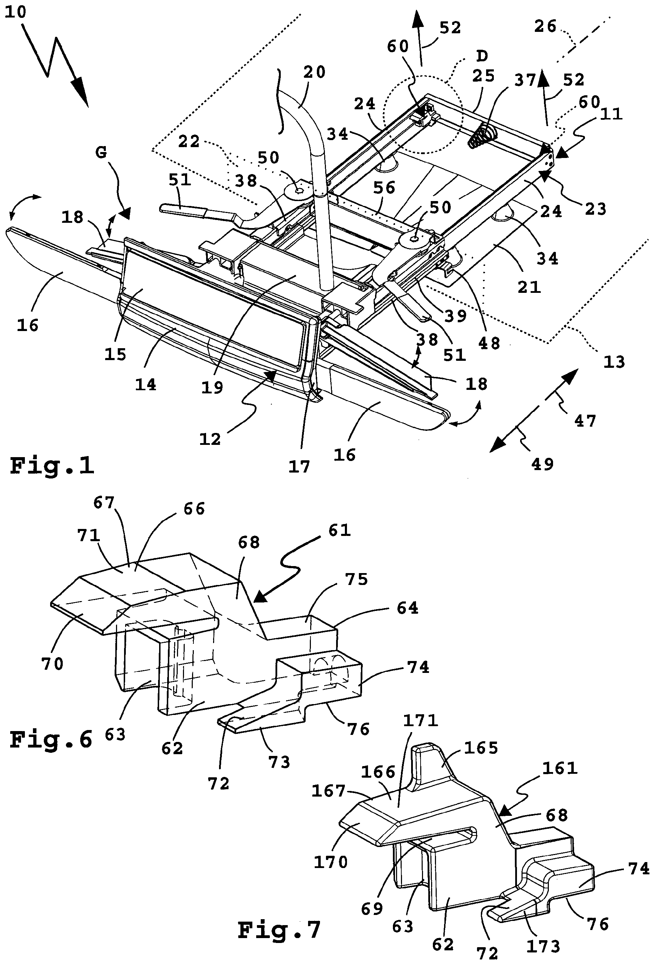

Der in Figur 1 in die Gebrauchsstellung G verstellte Schlitten 12 ermöglicht das Auflegen von Lasten, beispielsweise Fahrrädern, Gepäckstücken oder dergleichen. In dieser Gebrauchsstellung G sind Leuchten 16 ausgeschwenkt, so dass sie die nicht dargestellten Leuchten des Kraftfahrzeugs 13 ergänzen oder ersetzen. Die Leuchten 16 können aus der in Figur 1 dargestellten Nutzstellung in eine Nichtgebrauchsstellung anhand von Leuchten-Schwenklagern 17 verstellt werden, wo sie dann näher an einem Schlittengestell 38 des Schlittens 12 sind.

Am Schlitten 12, insbesondere dessen Schlittengestell 38, sind Lasttragteile 18 befestigt, zum Beispiel Rinnen zum Aufstellen von Fahrrädern. Es können selbstverständlich auch andersartige Lasttragteile vorgesehen sein, beispielsweise Behälter für zu transportierende Gegenstände oder dergleichen. Die Lasttragteile 18 sind aus der ausgeschwenkten Stellung gemäß Figur 1 in einen Innenraum des Schlittengestells 38 hinein verschwenkbar, so dass sie die Verstellung des Schlittens 12 zwischen der Gebrauchsstellung G und der Ruhestellung R nicht stören.

Eine am Schlitten 12 angeordnete Last kann auch durch eine Stütze 20 abgestützt werden, die in der Gebrauchsstellung gemäß Figur 1 nach oben vor den Schlitten 12, insbesondere das Schlittengestell 38 vorsteht. Beispielsweise ist die Stütze 20 an einem Querträger 19 des Schlittens 12 befestigt, zum Beispiel eingesteckt oder beweglich gelagert.

Am Kraftfahrzeug 13 ist eine Lastenträgeraufnahme 22 vorgesehen, in die der Schlitten 12 in der Ruhestellung R hinein verstellt ist, so dass das Stoßfängerteil 14 mit dem übrigen Stoßfänger des Kraftfahrzeugs 13 fluchtet. Am Boden oder Stützbereich 21 der Lastenträgeraufnahme 22 ist die Schlitten-Führungsbasis 11 befestigt.

Die Schlitten-Führungsbasis 11 weist ein Führungsgestell 23 auf, das zwei zu einer Längsachse 26 verlaufende Führungsschienen 24 aufweist, die durch einen Querträger 25 miteinander verbunden sind. Der Querträger 25 bildet sozusagen einen Grundschenkel des Führungsgestells 23, die Führungsschienen 24 Seitenschenkel davon.

Der Querträger 25 hat eine im montierten Zustand vertikal orientierte Grundwand 27, von der Seitenschenkel 28 in Richtung der Führungsschienen 24 abstehen. Die Führungsschienen 24 sind zwischen den Seitenschenkeln 28 angeordnet und stützen sich stirnseitig vorteilhaft an der Grundwand 27 ab. Die Führungsschienen 24 und der Querträger 25 sind beispielsweise miteinander verschraubt, vernietet oder verschweißt.

Das Profil der Führungsschienen 24 sieht wie folgt aus: von einer Grundwand 29 steht unten ein Stützschenkel 30 ab, der sozusagen als Montagewinkel dient. Jedenfalls ist der Stützschenkel 30 mit der Lastenträgeraufnahme 22 verbunden.

Dem Stützschenkel 30 gegenüberliegend befindet sich ein Laufprofil 31 der Führungsschiene 24, an der Läuferschienen 39 eines Schlittengestells 38 des Schlittens 12 entlang laufen bzw. geführt sind.

Das Laufprofil 31 ist in Querschnitt U-förmig oder auch C-förmig und hat einen oberseitigen Schenkel 32, dessen der Läuferschiene 39 zugewandte Außenseite eine Lauffläche 43 darstellt, sowie einen davon abstehenden Schenkel 33, die der Grundwand 29 in einem Abstand gegenüberliegt. Mithin ist also zwischen dem Schenkel 32 und der Grundwand 29 eine Aufnahme 44 definiert.

Die Führungsschienen 24 sind anhand von Stützen 34 am Stützbereich 21 oder Boden der Lastenträgeraufnahme 22 abgestützt. Die Stützen 34 sind beispielsweise kegelförmig oder säulenförmig.

Beispielsweise sind die Führungsschienen 24 anhand von Schrauben 35 mit den Stützen 34 verschraubt. Ein Schraubabschnitt der Schrauben 35 durchdringt beispielsweise den Stützschenkel 30 und ist von der der Stütze 34 gegenüberliegenden Seite her anhand einer Mutter 36 gesichert.

Die Läuferschienen 39 können an den Führungsschienen 24 parallel zur Längsachse 26 verschoben werden. Mithin sind also die Läuferschienen 39 an den Führungsschienen 24 bezüglich der Längsachse 26 oder einer dazu parallelen Achse geführt.

In Richtung der Gebrauchsstellung G ist der Schlitten 12 durch eine Auswurffeder 37 belastet. Die Auswurffeder 37 ist beispielsweise am Querträger 25 befestigt und steht in Richtung des Schlittens 12 oder des Schlittengestells 38 vor. Beim Verstellen des Schlittens 12 in Richtung der Ruhestellung R wird die Auswurffeder 37 gespannt und drückt den Schlitten 12 in Richtung der Gebrauchsstellung G.

Das Profil der Läuferschienen 39 weist einen Grundschenkel 40 auf, von dem U-förmige Seitenschenkel 41 abstehen. An den freien, vom Grundschenkel 40 entfernten Endbereichen der Seitenschenkel 41 befinden sich U-förmige Verstärkungsprofile 42. Die Läuferschienen 39 sind also von oben her auf die Führungsschienen 24 aufgesetzt, wobei die sich zwischen den Seitenschenkeln 41 befindliche Innenseite des Grundschenkels 40 der Lauffläche 43 gegenüberliegt und an dieser entlang gleitet.

Diese Details sind an sich schon in DE 10 2009 060 387 A1 erläutert. Dort findet sich auch eine Erläuterung dazu, dass vorzugsweise zwischen den Führungsschienen 24 und den Läuferschienen 39 Distanzkörper vorgesehen sind, beispielsweise ein Distanzkörper 45, der nach oben vor die Lauffläche 43 vorsteht und in der Ruhestellung R in eine Vertiefung 46 an der Innenseite des Grundschenkels 40 der Läuferschiene 39 eintaucht, also inaktiv ist. Dies hat den Vorteil, dass der Distanzkörper 45 nur bei der Verstellung zwischen der Gebrauchsstellung G und der Ruhestellung R aktiv ist und eine Distanz zwischen den Führungsschienen 24 und den Läuferschienen 39 herstellt, so dass diese optimal aneinander entlang gleiten. Allerdings ist der Distanzkörper 45 in der Ruhestellung R nicht wirksam.

In der Gebrauchsstellung G ist der Schlitten 12 durch Spanneinrichtungen 50 verspannt. Die Spanneinrichtungen 50 sind beispielsweise anhand von Schwenkhebeln 51 betätigbar.

Für die Ruhestellung R sind Spanneinrichtungen 50 nicht nutzbar. Dort ist der Schlitten 12 an sich nur verriegelt.

Eine gewisse Verspannung erfährt der Schlitten 12 in der Ruhestellung R durch die Auswurffeder 37, die entgegen der Bewegungsrichtung 47, die in Richtung der Ruhestellung R orientiert ist, den Schlitten 12 zu einer Verriegelungseinrichtung 48 hin in einer Bewegungsrichtung 49 vorspannt. Da jedoch die Verriegelungseinrichtung 48 mit einem Riegel, eine Riegelfalle oder dergleichen ausgestattet ist und auch die Distanzkörper 45 in der Ruhestellung R inaktiv sind, lägen die Führungsschienen 24 und die Läuferschiene 39 in der Ruhestellung R an sich mit einem gewissen Spiel aneinander an, was zu unerwünschtem Verschleiß und ebenso unangenehmen Klappergeräuschen beim Fahrbetrieb des Kraftfahrzeugs 13 führen kann. Hier schafft die folgende, erfindungsgemäße Maßnahme Abhilfe:
An den beiden Führungsschienen 24 ist jeweils endseitig in Bezug auf die Bewegungsrichtung 47, also der Ruhestellung R zugeordnet, ein Klemmkörper 61 einer Klemmeneinrichtung 60 angeordnet, der mit einem Gegenklemmkörper 90 an der jeweils zugeordneten Läuferschiene 39 zusammenwirkt derart, dass der Schlitten 12 in der Ruhestellung R in einen Klemmsitz bezüglich der Schlitten-Führungsbasis 11 gelangt und somit nicht oder jedenfalls in einem deutlich geringeren Umfang zu Vibrationen beim Fahrbetrieb des Kraftfahrzeugs 13 neigt.

Der Klemmkörper 61 weist einen Grundkörper 62 auf, der zur Montage am Führungsgestell 23 ausgebildet ist. Der Grundkörper 62 hat eine frontseitige Steckaufnahme 63, die formschlüssig auf eine jeweilige Mutter 36 aufgesteckt werden kann. Die Steckaufnahme 63 ist vorteilhaft als eine Verdrehsicherung für die Mutter 36 ausgestaltet, das heißt wenn die Schraube 35 in die Mutter 36 eingeschraubt wird, wird damit automatisch auch eine Verdrehsicherung für die Mutter 36 bereitgestellt. Das ist aber nicht unbedingt notwendig, sondern nur vorteilhaft. In der Regel wird man nämlich zunächst die Führungsschienen 24 bzw. das Führungsgestell 23 am Stützbereich 21 des Kraftfahrzeugs 13 montieren, so dass die Mutter 36 bereits als Steckvorsprung für die Steckaufnahme 63 bereitsteht.

Eine Innenkontur der Steckaufnahme 63 ist zu einem Formschluss mit einer Außenkontur der Mutter 36 oder einer sonstigen zur Befestigung des Lastenträgers 10 am Kraftfahrzeug 13 vorgesehenen Komponente ausgestattet.

Eine weitere Abstützung erfährt der Klemmkörper 61 rückseitig, beispielsweise indem seine hintere Stirnseite 64 sich an dem Querträger 25, insbesondere dessen Grundwand 27 abstützt.

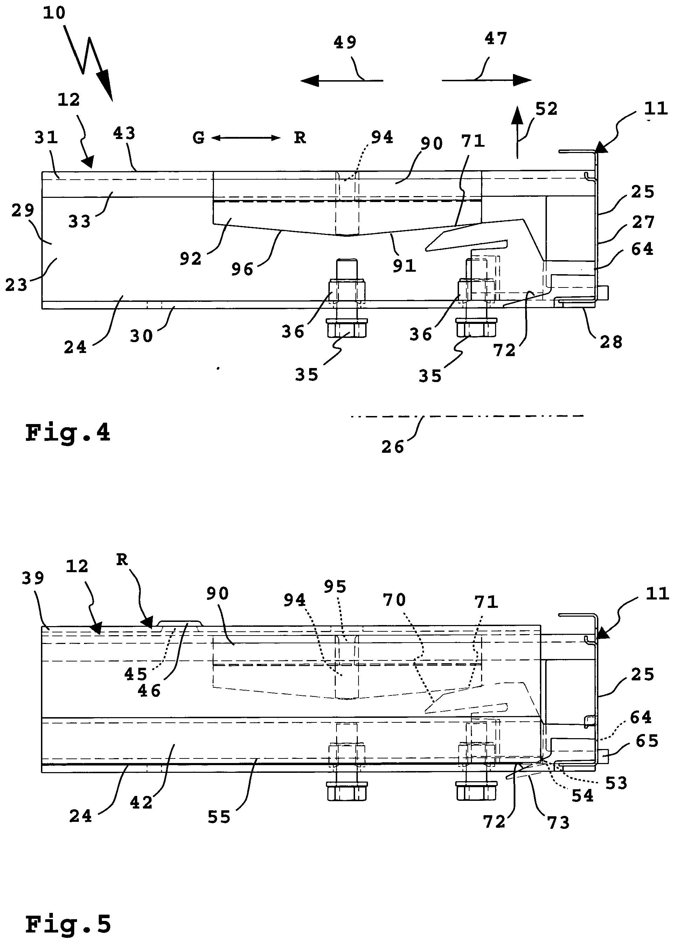

Auch dort kann zweckmäßigerweise eine Steckverbindung mit der Schlitten-Führungsbasis 11 vorgesehen sein. Beispielsweise steht ein Steckvorsprung 65 nach hinten vor die Stirnseite 64 vor und greift in eine Steckaufnahme am Querträger 25, zum Beispiel der Grundwand 27, ein (Figur 5).

Ein alternatives Befestigungskonzept, das auch in Kombination mit den vorigen Befestigungsmöglichkeiten realisierbar ist, ist bei der in Figur 7 dargestellten Variante des Klemmkörpers 61, nämlich einem Klemmkörper 161, dargestellt.

Die Klemmkörper 61, 161 sind nahezu identisch, wobei jedoch nach oben hin, z.B. wie eine Art Flosse, ein Steckvorsprung 165 vor den Klemmkörper 161 vorsteht, der in die Aufnahme 44 des Laufprofils 31 von innen her eingreifen kann. Die Aufnahme 44 bildet somit eine Steckaufnahme. Durch diesen Steck-Eingriff ist eine optimale seitliche Abstützung des Klemmkörpers 161 quer zur Längsachse 26 realisiert. Der Steckvorsprung 165 ist vorzugsweise mit Schrägflächen versehen und/oder biegeflexibel derart, dass er in die relativ steife Aufnahme 44 sozusagen eingefädelt oder eingerastet werden kann.

Die beiden Klemmkörper 61 und 161 werden nachfolgend insgesamt beschrieben, wobei zur Verdeutlichung von Unterschieden die Bezugsziffern um 100 voneinander verschieden sind.

Von dem Grundkörper 62 steht nach oben hin ein Klemmabschnitt 66, 166 ab, der mit dem Grundkörper 62 verbunden ist. Der Klemmabschnitt 66, 166 umfasst einen nach vorn, in Richtung der Stirnseite der jeweiligen Läuferschiene 39 hin, orientierten federnden Vorsprung 67, 167. Der Vorsprung 67, 167 ist mit einem Verbindungsabschnitt 68 mit dem Grundkörper 62 einstückig verbunden. Zwischen dem Vorsprung 67 und einer Oberseite des Grundkörpers 62 ist ein Abstand 69, zum Beispiel eine Art Schlitz, vorgesehen derart, dass der freie Abschnitt des Vorsprungs 67 zu dem Grundkörper 62 hin ausgelenkt werden kann und von diesem weg federt. Mithin hat also der Vorsprung 67 eine Tendenz, vom Grundkörper 62 weg, in der Zeichnung bzw. im eingebauten Zustand des Lastenträgers 10 nach oben hin, zu federn.

Der Vorsprung 67, 167 steht nach vorn vor den Verbindungsabschnitt 68 und vor den Grundkörper 62 vor.

An einer freien Stirnseite des Vorsprungs 67, 167 ist eine Auflaufschräge 70, 170 vorgesehen, auf die der Gegenklemmkörper 90 bei der Verstellung des Schlittens 12 in Richtung der Ruhestellung R zunächst aufläuft, bevor er in Kontakt mit einer in der Bewegungsrichtung 47 nachgelagerten Klemmkontur 71, 171 gelangt. Dadurch wird zudem der Vorsprung 67, 167 quer zur Bewegungsrichtung 47, also zum Grundkörper 62 hin, federnd ausgelenkt, was man in den Figuren 4 und 5 erkennen kann.

Eine weitere Verklemmung erfolgt durch die Läuferschiene 39 selbst, die auf eine zweite, neben der Klemmkontur 71 angeordnete Klemmkontur 72, 172 bei der Bewegung des Schlittens 12 in Richtung der Ruhestellung R gelangt.

Die Klemmkontur 72, 172 ist in einem Längsabstand bezüglich der Längsachse 26 zu der Klemmkontur 71, 171 angeordnet derart, dass bei einer Verstellung des Schlittens 12 in Richtung der Ruhestellung R zunächst der Gegenklemmkörper 90 in Eingriff mit der Klemmkontur 71, 171 und anschließend die Läuferschiene 39 mit der Klemmkontur 72, 172 in Eingriff gelangt.

Die Klemmkontur 72, 172 ist vorzugsweise ebenfalls federnd nachgiebig, was man beispielsweise in Figur 5 erkennen kann. Die Klemmkontur 72, 172 ist an einem seitlich vor den Grundkörper 62 vorstehenden Vorsprung 73, 173 angeordnet.

Der Vorsprung 73, 173 steht von einem Verbindungskörper 74 seitlich ab, der mit dem Grundkörper 62 verbunden ist, beispielsweise an dessen hinterem Abschnitt 75. Eine Rückseite des Verbindungskörpers 74 fluchtet mit der Stirnseite 64, stützt sich also auch an der Grundwand 27 des Querträgers 25 ab.

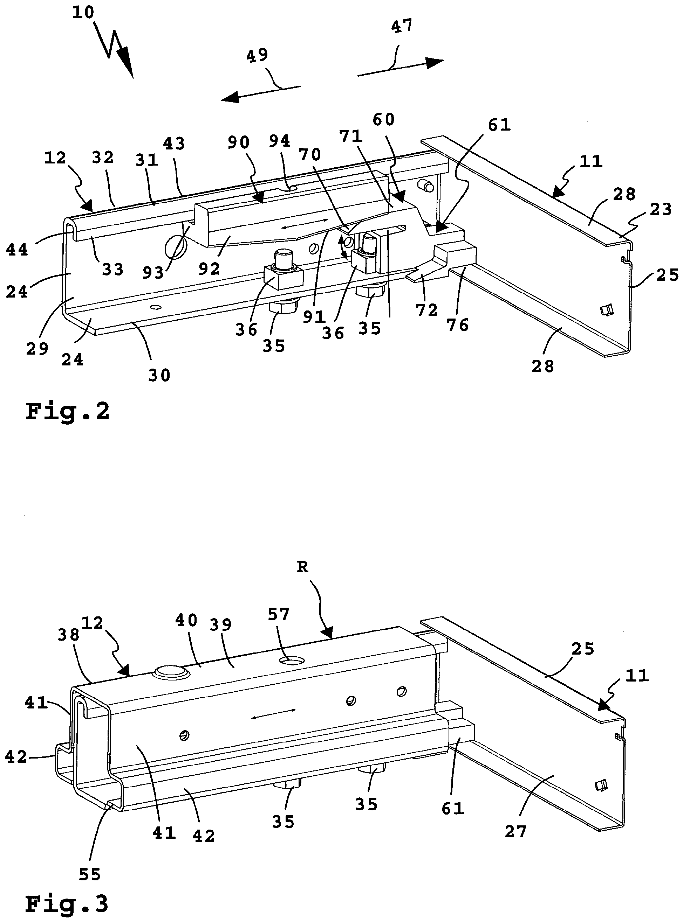

Für eine optimale Anpassung, d.h. einen formschlüssigen Halt am Querträger 25, sorgt eine Aussparung 76 an der Unterseite des Grundkörpers 62 und des Verbindungskörpers 74, die L-förmig ist. Die Aussparung 76 ist zum formschlüssigen Eingriff des Seitenschenkels 28 des Querträgers 25 vorgesehen (Figur 2).

Der Gegenklemmkörper 90 weist eine Gegenklemmkontur 91 auf, die an einem Grundkörper 92 vorgesehen ist. Der Grundkörper 92 weist beispielsweise einen seitlichen Führungsabschnitt 93 auf, der unterseitig am Laufprofil 31 geführt ist.

Der Grundkörper 92 ist mit einer Bohrung 94 versehen, in die eine die Läuferschiene 39 an einer Öffnung 57 durchdringende Schraube 95 eingeschraubt werden kann. Mithin ist also der Gegenklemmkörper 90 mit der Läuferschiene 39 verschraubt. Er könnte auch angeklemmt und/oder angesteckt sein.

An der dem Grundschenkel 40 der Läuferschiene 39 abgewandten Seite befindet sich die Gegenklemmkontur 91. Die Gegenklemmkontur 91 ist ebenso wie die Klemmkonturen 71, 72 (171, 172) als eine Schrägfläche ausgestaltet. Die Gegenklemmkontur 91 kann also zunächst auf die Auflaufschräge 70, 170 auflaufen und gelangt dann auf die Klemmkontur 71, 171. Die Klemmkontur 71, 171 bildet sozusagen eine Klemmschräge.

Die Neigungen der Klemmkonturen 71, 171 und der Gegenklemmkontur 91 sind zweckmäßigerweise etwa gleich. Die Auflaufschräge 70, 170 hingegen ist wesentlich steiler, so dass die Klemmkonturen 71, 171 mit relativ geringem Widerstand auf die Klemmkonturen 71, 171 auflaufen können und sozusagen auf eine Rampe auflaufen. Dabei wird der Vorsprung 67, 167 quer zur Längsachse 26, als auch quer zur Bewegungsrichtung 47, ausgelenkt, so dass der Schlitten 12 eine Kraft oder Klemmkraft 52 quer zur Längsachse 26 erfährt.

Der Gegenklemmkörper 90 weist vorzugsweise noch eine weitere Gegenklemmkontur 96 auf, die beispielsweise mit einem der Gebrauchsstellung G zugeordneten, beim Ausführungsbeispiel konkret jedoch nicht vorhandenen Klemmkörper zusammenwirkt. Ein derartiger Klemmkörper könnte beispielsweise an den Führungsschienen 24 im Bereich der Längsposition in der Spanneinrichtungen 50 vorgesehen sein (Figur 1).

Die Klemmeneinrichtung 60 ist symmetrisch jeweils an beiden Paarungen von Führungsschiene 24 und Läuferschiene 39 angeordnet. In der Zeichnung ist nur die in Fahrtrichtung des Kraftfahrzeugs 13 linke Klemmeneinrichtung 60 dargestellt, wobei auch an dem Schienenpaar in Fahrtrichtung rechts eine derartige Klemmeneinrichtungen 60 vorteilhaft ist (gestrichelt in Figur 1 eingezeichnet).

Neben der Gegenklemmkontur 91 weist der Schlitten 12 noch weitere Gegenklemmkonturen 53 auf, die jedoch nicht unmittelbar von den Gegenklemmkörper 90 gebildet werden, sondern direkt von den Läuferschiene 39 bereitgestellt werden. Eine jeweilige Gegenklemmkontur 53 befindet sich beispielsweise an einer freien Stirnseite 54 eines Verstärkungsprofils 42. Beispielsweise läuft eine freie Stirnseite eines unteren Schenkels 55 des Verstärkungsprofils 42 auf die Klemmkontur 72, 172 auf.

Die Klemmkontur 72, 172 weist eine Keilschräge auf.

Bevorzugt ist der Vorsprung 73, 173 federnd nachgiebig, so dass er von der Gegenklemmkontur 53 ausgelenkt werden kann (Figur 5)

Der Vorsprung 73, 173 beaufschlagt das Profil der Läuferschiene 39 direkt in Richtung des Klemmsitz.

In Figur 1 sind die Klemmkräfte 52 eingezeichnet, die die Klemmeneinrichtungen 60 auf den Schlitten 12 ausüben. Bevorzugt ist es, dass die Klemmeneinrichtungen 60 den Schlitten 12 dort, wo die Klemmeneinrichtungen 60 wirksam sind, sozusagen von den Führungsschienen 24 abheben. Auch das wirkt einem Klappern oder anderen unangenehmen Geräuschen entgegen.

Weiterhin wirkt die Auswurffeder 37 in der Bewegungsrichtung 49, drückt also den Schlitten 12 in Richtung der Verriegelungseinrichtung 48, so dass der Schlitten 12 in Fahrtrichtung des Kraftfahrzeugs 13 vorn sozusagen vom Führungsgestell 23 etwas abgehoben ist und in Fahrtrichtung hinten von der Verriegelungseinrichtung 48 abgestützt ist.

Die Federkraft der Auswurffeder 37 und Klemmkräfte 52 wirken im Sinne eines Spannens oder Verklemmens des Schlittens 12 an der Schlitten-Führungsbasis 11.

## Patentansprüche

1. Lastenträger für ein Kraftfahrzeug (13), insbesondere einen Personenkraftwagen, mit einer Schlitten-Führungsbasis (11) und mit einem an der Schlitten-Führungsbasis (11) geführten, zwischen einer Ruhestellung (R) und einer Gebrauchsstellung (G) entlang einer Längsachse (26) verstellbaren Schlitten (12), wobei der Schlitten (12) in der Gebrauchsstellung (G) weiter als in der Ruhestellung (R) vor die Schlitten-Führungsbasis (11) vorsteht, wobei der Schlitten (12) an der Schlitten-Führungsbasis (11) anhand von Führungsschienen (24) geführt ist, an denen Läuferschienen (39) oder Rollen geführt sind, wobei der Lastenträger (10) mindestens eine der Ruhestellung (R) oder der Gebrauchsstellung (G) zugeordnete Klemmkontur (71; 171) an einem Klemmkörper (61; 161) und mindestens eine mit der Klemmkontur (71; 171) zusammenwirkende Gegenklemmkontur (91; 53) an einem Gegenklemmkörper (90) aufweist, die an der Schlitten-Führungsbasis (11) und dem Schlitten (12) angeordnet sind und die durch eine Bewegung des Schlittens (12) in Richtung einer Längsposition bezüglich der Längsachse (26) in Eingriff miteinander kommen, um den Schlitten (12) bezüglich der Schlitten-Führungsbasis (11) in einem Klemmsitz zu verklemmen, **dadurch gekennzeichnet, dass** der mindestens einen Klemmkontur (71; 171) und/oder der mindestens einen Gegenklemmkontur (91; 53) eine Auflaufschräge (70; 170) vorgelagert ist, an der die Gegenklemmkontur (91; 53) oder die Klemmkontur (71; 171) beim Auf lauf en auf den Klemmkörper (61; 161) oder den Gegenklemmkörper (90) aufläuft und in Richtung der Klemmkontur (71; 171) oder der Gegenklemmkontur (91; 53) geführt wird.

2. Lastenträger nach Anspruch 1, **dadurch gekennzeichnet, dass** die mindestens eine Klemmkontur (71; 171) und/oder die mindestens eine Gegenklemmkontur (91; 53) an einem in einer Klemmrichtung federbelasteten oder federnden Klemmabschnitt (66; 166), insbesondere einer federnden Zunge oder einem federnden Vorsprung (67; 167), des Klemmkörpers (61; 161) oder des Gegenklemmkörpers (90) angeordnet ist.

3. Lastenträger nach Anspruch 1 oder 2, **dadurch gekennzeichnet, dass** die mindestens eine Klemmkontur (71; 171) oder die mindestens eine Gegenklemmkontur (91; 53) eine Schrägfläche oder Keilfläche umfassen oder dadurch gebildet sind.

4. Lastenträger nach einem der vorhergehenden Ansprüche, **dadurch gekennzeichnet, dass** die Auflaufschräge (70; 170) eine steilere Neigung als eine Schrägfläche oder Keilfläche der mindestens einen Klemmkontur (71; 171) oder Gegenklemmkontur (91; 53) aufweist.

5. Lastenträger nach einem der vorhergehenden Ansprüche, **dadurch gekennzeichnet, dass** der Klemmkörper (61; 161) und/oder der Gegenklemmkörper (90) an einer der Schienen von Läuferschiene (39) oder Führungsschiene (24) fest angeordnet oder durch die Schiene gebildet ist und/oder dass die Klemmkontur (71; 171) oder die Gegenklemmkontur (91; 53) oder beide durch die Läuferschiene (39) oder die Führungsschiene (24) gebildet sind.

6. Lastenträger nach einem der vorhergehenden Ansprüche, **dadurch gekennzeichnet, dass** der Klemmkörper (61; 161) und/oder der Gegenklemmkörper (90) eine Steckkontur zur Herstellung einer Steckverbindung, insbesondere in einem Klemmsitz, mit einer Komponente des Schlittens (12) oder der Schlitten-Führungsbasis (11), insbesondere der Führungsschiene (24) oder der Läuferschiene (39) oder einer Befestigungskomponente der jeweiligen Schiene, aufweist.

7. Lastenträger nach einem der vorhergehenden Ansprüche, **dadurch gekennzeichnet, dass** der Klemmkörper (61; 161) oder der Gegenklemmkörper (90) an einem die Führungsschienen (24) oder die Läuferschienen (39) quer zur Bewegungsrichtung des Schlittens (12) verbindenden Querträgerelement (25) abgestützt ist.

8. Lastenträger nach einem der vorhergehenden Ansprüche, **dadurch gekennzeichnet, dass** der Klemmkörper (61; 161) und/oder der Gegenklemmkörper (90) mindestens eine Führungsfläche zur Führung an der jeweils gegenüberliegenden Läuferschiene (39) oder Führungsschiene (24) aufweist.

9. Lastenträger nach einem der vorhergehenden Ansprüche, **dadurch gekennzeichnet, dass** die mindestens eine Klemmkontur (71; 171) und die mindestens eine Gegenklemmkontur (91; 53) bei dem Verklemmen im Sinne einer Verlagerung des Schlittens (12) quer zu einer Bewegungsrichtung des Schlittens (12) beim Verstellen in die Gebrauchsstellung (G) oder die Ruhestellung (R) zwischen dem Schlitten (12) und der Schlitten-Führungsbasis (11) wirken und/oder die mindestens eine Klemmkontur (71; 171) und die mindestens eine Gegenklemmkontur (91; 53) in der Klemmstellung einen neben der Klemmkontur und Gegenklemmkontur befindlichen, insbesondere unmittelbar benachbarten, Bereich der Läuferschiene (39) von der Führungsschiene (24) abhebt.

10. Lastenträger nach einem der vorhergehenden Ansprüche, **dadurch gekennzeichnet, dass** der Klemmkörper (61; 161) oder der Gegenklemmkörper (90) mindestens zwei voneinander separate Klemmkonturen (71, 72; 171, 172) oder Gegenklemmkonturen (91; 53) aufweisen, die zur Zusammenwirkung mit voneinander separaten Gegenklemmkonturen (91; 53) oder Klemmkonturen am jeweils anderen Körper von Klemmkörper (61; 161) oder Gegenklemmkörper (90) vorgesehen sind.

11. Lastenträger nach Anspruch 11, **dadurch gekennzeichnet, dass** bei der Verstellung des Schlittens (12) in Richtung Klemmsitz-Längsposition, insbesondere der Gebrauchsstellung (G) oder der Ruhestellung (R), die Paarungen von Klemmkontur (71, 72; 171, 172) und Gegenklemmkontur (91; 53) sequenziell in Eingriff miteinander gelangen und/oder die Klemmkonturen (71, 72; 171, 172) und/oder die Gegenklemmkonturen (91; 53) bezüglich der Längsachse (26) einen Längsabstand zueinander haben.

12. Lastenträger nach einem der vorhergehenden Ansprüche, **dadurch gekennzeichnet, dass** der Klemmkörper (61; 161) an der einen Schiene von Läuferschiene (39) und Führungsschiene (24) angeordnet ist und der Gegenklemmkörper (90) an der anderen Schiene von Läuferschiene (39) und Führungsschiene (24) angeordnet ist, wobei die den Gegenklemmkörper (90) haltende Schiene und der Gegenklemmkörper (90) jeweils mindestens eine mit dem Klemmkörper (61; 161) zusammenwirkende Gegenklemmkontur (91; 53) aufweisen.

13. Lastenträger nach einem der vorhergehenden Ansprüche, **dadurch gekennzeichnet, dass** der Klemmkörper (61; 161) und/oder der Gegenklemmkörper (90) aus Kunststoff, insbesondere mit einer Härte von etwa 80-120 Shore D, besteht und/oder die Führungsschienen (24) und oder die Läuferschienen (39) aus Metall bestehen.

14. Lastenträger nach einem der vorhergehenden Ansprüche, **dadurch gekennzeichnet, dass** er eine Kupplungsvorrichtung zum lösbaren Ankuppeln an eine Halterung, insbesondere eine Anhängekupplung, des Kraftfahrzeugs aufweist oder der Schlitten in der Art einer Schublade aus dem Heck des Kraftfahrzeugs (13) ausfahrbar ist.

15. Lastenträger nach einem der vorhergehenden Ansprüche, **dadurch gekennzeichnet, dass** er zur Montage an einer Lastenträgeraufnahme (22) des Kraftfahrzeugs (13) vorgesehen ist und/oder der Schlitten (12) in der Gebrauchsstellung (G) zum Tragen einer Last weiter als in der Ruhestellung (R) vor die Schlitten-Führungsbasis (11) vorsteht und/oder dass die Längsposition bezüglich der Längsachse (26) die Ruhestellung (R) oder die Gebrauchsstellung (G) ist.

## Claims

1. Load carrier for a motor vehicle (13), in particular a car, with a carriage guide base (11) and with a carriage (12), guided on the carriage guide base (11) and adjustable along a longitudinal axis (26) between a rest position (R) and a position of use (G), wherein the carriage (12) in the position of use (G) protrudes further from the carriage guide base (11) than in the rest position (R), wherein the carriage (12) is guided on the carriage guide base (11) with the aid of guide rails (24), on which are guided running rails (39) or rollers, wherein the load carrier (10) has at least one clamping contour (71; 171) on a clamping body (61; 161) assigned to the rest position (R) or the position of use (G) and at least one mating clamping contour (91; 53) on a mating clamping body (90) interacting with the clamping contour (71; 171), which are located on the carriage guide base (11) and the carriage (12) and come into engagement with one another due to a movement of the carriage (12) in the direction of a longitudinal position with respect to the longitudinal axis (26), in order to wedge the carriage (12) into a clamp fit relative to the carriage guide base (11), **characterised in that** there is mounted in front of the clamping contour or contours (71; 171) and/or the mating clamping contour or contours (91; 53) and/or the mating clamping contour or contours (91; 53) a stop bevel (70; 170), on to which the mating clamping contour (91; 53) or the clamping contour (71; 171) runs when running on to the clamping body (61; 161) or the mating clamping body (90) and is guided in the direction of the clamping contour (71; 171) or the mating clamping contour (91; 53).

2. Load carrier according to claim 1, **characterised in that** the clamping contour or contours (71; 171) and/or the mating clamping contour or contours (91; 53) are provided on a clamping section (66; 166) which is sprung or spring-loaded in a clamping direction in particular a sprung tongue or a sprung projection (67; 167) of the clamping body (61; 161) or the mating clamping body (90).

3. Load carrier according to claim 1 or 2, **characterised in that** the clamping contour or contours (71; 171) and/or the mating clamping contour or contours (91; 53) include or are formed by an inclined surface or a wedge surface.

4. Load carrier according to any of the preceding claims, **characterised in that** the stop bevel (70; 170) has a steeper inclination than an inclined surface or wedge surface of the clamping contour or contours (71; 171) and/or the mating clamping contour or contours (91; 53).

5. Load carrier according to any of the preceding claims, **characterised in that** the clamping body (61; 161) and/or the mating clamping body (90) are firmly fixed to one of the rails of the running rails (39) or guide rail (24) or are or is formed by the rail, and/or that the clamping contour (71; 171) or the mating clamping contour (91; 53) or both are formed by the running rails (39) or the guide rail (24).

6. Load carrier according to any of the preceding claims, **characterised in that** the clamping body (61; 161) and/or the mating clamping body (90) have or has a plug-in contour for creating a plug connection, in particular in a clamp fit, with a component of the carriage (12) or the carriage guide base (11), in particular of the guide rail (24) or the running rail (39) or a fastening component of the respective rail.

7. Load carrier according to any of the preceding claims, **characterised in that** the clamping body (61; 161) or the mating clamping body (90) is supported on one of the guide rails (24) or the running rails (39) transversely to the movement direction of the cross-member element (25) connecting the carriage (12).

8. Load carrier according to any of the preceding claims, **characterised in that** the clamping body (61; 161) or the mating clamping body (90) have or has at least one guide surface for guidance on the respectively opposite running rail (39) or guide rail (24).

9. Load carrier according to any of the preceding claims, **characterised in that** the clamping contour or contours (71; 171) and/or the mating clamping contour or contours (91; 53) act during wedging for the purpose of shifting the carriage (12) transversely to a movement direction of the carriage (12) during adjustment into the position of use (G) or the rest position (R) between the carriage (12) and the carriage guide base (11) and/or the clamping contour or contours (71; 171) and/or the mating clamping contour or contours in the clamping position (91; 53) lift from the guide rail (24) a section of the running rail (39) located next to, in particular immediately adjacent to, the clamping contour and mating clamping contour.

10. Load carrier according to any of the preceding claims. **characterised in that** the clamping body (61; 161) or the mating clamping body (90) have at least two clamping contours (71, 72; 171, 172) or mating clamping contours (91; 53), which are provided for interaction with mating clamping contours (91; 53) or clamping contours, separate from one another, on the respective other body of clamping body (61; 161) or mating clamping body (90).

11. Load carrier according to claim 11, **characterised in that**, during adjustment of the carriage (12) in the direction of the clamp-fit longitudinal position, in particular the position of use (G) or the rest position (R), the pairings of clamping contour (71, 72; 171, 172) and mating clamping contour (91; 53) come into engagement with one another sequentially, and/or the clamping contours (71, 72; 171, 172) and/or the mating clamping contours (91; 53) have longitudinal clearance from one another with respect to the longitudinal axis (26).

12. Load carrier according to any of the preceding claims, **characterised in that** the clamping body (61; 161) is fitted to the one rail of running rail (39) and guide rail (24), and the mating clamping body (90) to the other rail of running rail (39) and guide rail (24), wherein the rail holding the mating clamping body (90) and the mating clamping body (90) have respectively at least one mating clamping contour (91; 53) interacting with the clamping body (61; 161).

13. Load carrier according to any of the preceding claims, **characterised in that** the clamping body (61; 161) and/or the mating clamping body (90) are made of plastic, in particular with a hardness of around 80-120 Shore D, and/or the guide rails (24) and/or the running rails (39) are made of metal.

14. Load carrier according to any of the preceding claims, **characterised in that** it has a coupling device for releasable coupling to a mounting, in particular a trailer coupling of the motor vehicle or the carriage in the form of a drawer which may be extended from the rear of the motor vehicle (13).

15. Load carrier according to any of the preceding claims, **characterised in that** it is provided for mounting on a load carrier seating (22) of the motor vehicle (13) and/or the carriage (12) extends further from the carriage guide base (11) in the position of use (G) for carrying a load than in the rest position (R), and/or that the longitudinal position relative to the longitudinal axis (26) is the rest position (R) or the position of use (G).

## Revendications

1. Support de charges pour un véhicule automobile (13), en particulier une voiture de tourisme, comprenant une base de guidage de chariot (11) et comprenant un chariot (12) guidé au niveau de la base de guidage de chariot (11), pouvant être déplacé entre une position de repos (R) et une position d'utilisation (G) le long d'un axe longitudinal (26), dans lequel le chariot (12) fait davantage saillie dans la position d'utilisation (G) que dans la position de repos (R) de la base de guidage de chariot (11), dans lequel le chariot (12) est guidé au niveau de la base de guidage de chariot (11) à l'aide de rails de guidage (24), au niveau desquels des rails coulissants (39) ou des roulettes sont guidés, dans lequel le support de charges (10) présente au moins un contour de serrage (71 ; 171) associé à la position de repos (R) ou à la position d'utilisation (G) au niveau d'un corps de serrage (61 ; 161) et au moins un contre-contour de serrage (91 ; 53) coopérant avec le contour de serrage (71 ; 171) au niveau d'un contre-corps de serrage (90), lesquels sont disposés au niveau de la base de guidage de chariot (11) et du chariot (12) et qui viennent en prise les uns avec les autres par un déplacement du chariot (12) en direction d'une position longitudinale par rapport à l'axe longitudinal (26) afin d'assembler par serrage dans un siège de serrage le chariot (12) par rapport à la base de guidage de chariot (11), **caractérisé en ce qu'**un chanfrein d'entrée (70 ; 170) est monté en amont de l'au moins un contour de serrage (71 ; 171) et/ou de l'au moins un contre-contour de serrage (91 ; 53), au niveau duquel chanfrein d'entrée le contre-contour de serrage (91 ; 53) ou le contour de serrage (71 ; 171) passent en passant sur le corps de serrage (61 ; 161) ou sur le contre-corps de serrage (90) et sont guidés en direction du contour de serrage (71 ; 171) ou du contre-contour de serrage (91 ; 53).

2. Support de charges selon la revendication 1, **caractérisé en ce que** l'au moins un contour de serrage (71 ; 171) et/ou l'au moins un contre-contour de serrage (91 ; 53) sont disposés au niveau d'une section de serrage (66 ; 166) contrainte par des ressorts ou sur ressorts dans une direction de serrage, en particulier d'une languette sur ressorts ou d'une partie faisant saillie (67 ; 167) sur ressorts, du corps de serrage (61 ; 161) ou du contre-corps de serrage (90).

3. Support de charges selon la revendication 1 ou 2, **caractérisé en ce que** l'au moins un contour de serrage (71 ; 171) ou l'au moins un contre-contour de serrage (91 ; 53) comprennent une surface oblique ou une surface biseautée ou en sont formés.

4. Support de charges selon l'une quelconque des revendications précédentes, **caractérisé en ce que** le chanfrein d'entrée (70 ; 170) présente une inclinaison plus raide qu'une surface oblique ou qu'une surface biseautée de l'au moins un contour de serrage (71 ; 171) ou de l'au moins un contre-contour de serrage (91 ; 53).

5. Support de charges selon l'une quelconque des revendications précédentes, **caractérisé en ce que** le corps de serrage (61 ; 161) et/ou le contre-corps de serrage (90) sont disposés de manière solidaire au niveau d'un rail parmi le rail coulissant (39) ou le rail de guidage (24) ou sont formés par le rail, et/ou que le contour de serrage (71 ; 171) ou le contre-contour de serrage (91 ; 53) ou les deux sont formés par le rail coulissant (39) ou par le rail de guidage (24).

6. Support de charges selon l'une quelconque des revendications précédentes, **caractérisé en ce que** le corps de serrage (61 ; 161) et/ou le contre-corps de serrage (90) présentent un contour d'emboîtement servant à établir une liaison par emboîtement, en particulier dans un siège de serrage, avec une composante du chariot (12) ou de la base de guidage de chariot (11), en particulier du rail de guidage (24) ou du rail coulissant (39) ou d'une composante de fixation du rail concerné.

7. Support de charges selon l'une quelconque des revendications précédentes, **caractérisé en ce que** le corps de serrage (61 ; 161) ou le contre-corps de serrage (90) prend appui au niveau d'un élément de support transversal (25) reliant les rails de guidage (24) ou les rails coulissants (39) de manière transversale par rapport à la direction de déplacement du chariot (12).

8. Support de charges selon l'une quelconque des revendications précédentes, **caractérisé en ce que** le corps de serrage (61 ; 161) et/ou le contre-corps de serrage (90) présentent au moins une surface de guidage servant au guidage au niveau du rail coulissant (39) ou du rail de glissement (24) respectivement faisant face.

9. Support de charges selon l'une quelconque des revendications précédentes, **caractérisé en ce que** l'au moins un contour de serrage (71 ; 171) et l'au moins un contre-contour de serrage (91 ; 53) agissent lors de l'assemblage par serrage au sens d'un déplacement du chariot (12) de manière transversale par rapport à une direction de déplacement du chariot (12) lors de l'ajustement dans la position d'utilisation (G) ou dans la position de repos (R) entre le chariot (12) et la base de guidage de chariot (11), et/ou l'au moins un contour de serrage (71 ; 171) et l'au moins un contre-contour de serrage (91 ; 53) soulèvent du rail de guidage (24), dans la position de serrage, une zone se trouvant à côté du contour de serrage et du contre-contour de serrage, en particulier directement adjacent, du rail coulissant (39).

10. Support de charges selon l'une quelconque des revendications précédentes, **caractérisé en ce que** le corps de serrage (61 ; 161) ou le contre-corps de serrage (90) présentent au moins deux contours de serrage (71, 72 ; 171, 172) ou des contre-contours de serrage (91 ; 53) séparés l'un de l'autre, lesquels sont prévus afin de coopérer avec des contre-contours de serrage (91 ; 53) ou des contours de serrage séparés les uns des autres au niveau de l'autre corps respectivement du corps de serrage (61 ; 161) ou du contre-corps de serrage (90).

11. Support de charges selon la revendication 11, **caractérisé en ce que** lors de l'ajustement du chariot (12) en direction de la position longitudinale de siège de serrage, en particulier de la position d'utilisation (G) ou de la position de repos (R), les appariements du contour de serrage (71, 72 ; 171, 172) et du contre-contour de serrage (91 ; 53), parviennent en prise les uns avec les autres de manière séquentielle et/ou les contours de serrage (71, 72 ; 171, 172) et/ou les contre-contours de serrage (91 ; 53) ont les uns par rapport aux autres une distance longitudinale par rapport à l'axe longitudinal (26).

12. Support de charges selon l'une quelconque des revendications précédentes, **caractérisé en ce que** le corps de serrage (61 ; 161) est disposé au niveau d'un rail parmi le rail coulissant (39) ou le rail de guidage (24), et le contre-corps de serrage (90) est disposé au niveau de l'autre rail parmi le rail coulissant (39) ou le rail de guidage (24), dans lequel le rail maintenant le contre-corps de serrage (90) et le contre-corps de serrage (90) présentent respectivement au moins un contre-contour de serrage (91 ; 53) coopérant avec le corps de serrage (61 ; 161).

13. Support de charges selon l'une quelconque des revendications précédentes, **caractérisé en ce que** le corps de serrage (61 ; 161) et/ou le contre-corps de serrage (90) sont constitués de matière plastique, en particulier présentant une dureté d'environ 80 - 120 Shore D, et/ou les rails de guidage (24) et/ou les rails coulissants (39) sont constitués de métal.

14. Support de charges selon l'une quelconque des revendications précédentes, **caractérisé en ce qu'**il présente un dispositif de couplage servant à l'accouplement amovible au niveau d'un support, en particulier un attelage de remorque du véhicule automobile, ou le chariot peut être sorti de l'arrière du véhicule automobile (13) à la manière d'un tiroir.

15. Support de charges selon l'une quelconque des revendications précédentes, **caractérisé en ce qu'**il est prévu aux fins du montage au niveau d'un logement de support de charges (22) du véhicule automobile (13), et/ou le chariot (12) fait davantage saillie dans la position d'utilisation (G) afin de supporter une charge que dans la position de repos (R) de la base de guidage de rail (11), et/ou que la position longitudinale est, par rapport à l'axe longitudinal (26), la position de repos (R) ou la position d'utilisation (G).
